# EUROPÄISCHE PATENTSCHRIFT

(11) **EP 1 614 824 B1**
(45) Veröffentlichungstag und Bekanntmachung des Hinweises auf die Patenterteilung: **15.07.2009**
(21) Anmeldenummer: 05010421.5
(22) Anmeldetag: 13.05.2005
(51) Int. Cl.: E04D 13/147, F16L 5/00

(54) **Luftdichtungsmanschette**
Air seal sleeve
Manchon d'étanchéité à l'air

(30) Priorität: 09.07.2004 DE 102004033192; 10.08.2004 DE 102004038687
(43) Veröffentlichungstag der Anmeldung: 11.01.2006
(73) Patentinhaber: Knauf Insulation GmbH, 84359 Simbach am Inn (DE)
(72) Erfinder: Weissmüller, Armin, 34292 Ahnatal (DE); Bolender, Torsten, 34134 Kassel (DE)
(74) Vertreter: Farmer, Guy Dominic

(56) Entgegenhaltungen:
- DE-A1- 3 900 909
- DE-U1- 29 703 352
- GB-A- 2 269 214
- US-A- 4 704 840

## Beschreibung

Die Erfindung betrifft eine Luftdichtungsmanschette gemäß dem Oberbegriff des Anspruchs 1, insbesondere für Installationsdurchdringungen an Gebäuden wie Rohr- oder Leitungsdurchführungen. Sie ist mit einer Dichtplane zur Anlage an einer im Wesentlichen planen Fläche und einem Dichtkragen versehen, welcher um einen Durchgang in der Dichtplane angeordnet ist und von der Dichtplane vorsteht, wobei sich ein erster Schlitz von einem Rand der Dichtplane zu dem Durchgang und ein zweiter Schlitz von einer offenen Stirnseite des Dichtkragens zu der anderen offenen Stirnseite des Dichtkragens erstrecken.

Die Anforderungen an die Luftdichtheit von Gebäuden sind durch die Energieeinsparverordnung (EnEV) und die darin erwähnten Normen gesetzlich geregelt. Diese und weitere bauaufsichtlich eingeführte Normen befassen sich mit der Festlegung der Grenzwerte für den Grad der Undichtheiten, der Messtechniken sowie Empfehlungen für die Ausführung der Luftdichtungsmaßnahmen (Musterlösungen). Um eine Luftdichtheit von Gebäuden im Bereich von Installationsdurchdringungen bspw. im Dachbereich eines Gebäudes zu erreichen, sind bereit verschiedene Luftdichtungsmanschetten bekannt.

So wird in der DE 199 25 623 A1 eine Dichtungsmanschette zur luftdichten Ausführung von Leitungs- oder Rohrdurchdringungen beschrieben, die aus einer als Dichtplane wirkenden Grundplatte und einem Dichtkragen oder Stützkörper mit einer exakt auf den Durchmesser der Leitung angepassten Durchführungsöffnung aufgebaut ist. Dabei besteht der Kragen aus einem elastischen Material und ist konisch als im Wesentlichen glatter Kegelstumpfmantel ausgebildet, um sich eng um einen Leitungsabschnitt herumzuwinden und dabei eine volle Dichtwirkung zu geben. Die Dichtungsmanschette kann ein- oder mehrteilig aufgebaut sein, muss aber aus ausreichend flexiblem und elastischem Gewebe, Gewirke, Vlies oder Schichtmaterial bestehen, um sich an die jeweiligen Rohrdurchmesser anzupassen. Aufwendig ist hierbei insbesondere der dichtende Abschluss des Dichtkragens, der sich besonders eng an den jeweiligen Rohrumfang anlegen muss. Ein weiterer Nachteil liegt darin, dass die Manschette nicht nachträglich an fertiggestellte Installationen angebracht werden kann, weil die Installation (Rohre, Leitungen oder Kabel) durch die zentrale Öffnung der Manschette durchgefädelt werden muss. Ähnliche Dichtungsmanschetten sind in der DE 198 00 115 A1, der DE 298 22 257 U1 oder der DE 202 00 820 U1 beschrieben.

Um zur Verbesserung der Abdichtung von Rohr- und Kabeldurchführungen in Kellerwänden eine Manschette zu schaffen, die für Rohre und Leitungen unterschiedlicher Durchmesser und Formen flexibel einsetzbar ist, ist in der DE 297 03 352 U1 eine verstellbare Dichtmanschette aus elastischem Material mit einer Grundfläche und einem sich davon einteilig erstreckenden Kragen vorgeschlagen worden, die vom Außenrand der Grundfläche zum oberen Rand des Kragens durchtrennt ist. Dadurch ist es möglich, die an die Trennstelle angrenzenden Bereiche des Kragens und der Grundfläche der Dichtmanschette derart anzuordnen, dass sie jeweils mit den anderen, an die Trennstelle angrenzenden Bereichen überlappen. Auf diese Weise kann das Material um fertige Installationen unterschiedlicher Größe gelegt werden. Das verwendete gummielastische Material erlaubt allerdings kein einfaches Verkleben bspw. mit einem Klebestreifen, weil der Kleber des Klebestreifens aufgrund der Spannungen in dem elastischen Material nicht dauerhaft hält. Daher muss die Dichtmanschette im Bereich der Rohr- und Kabeldurchführungen zur Gewährleistung einer sicheren Abdichtung mit einer zusätzlichen Bitumendickbeschichtung versehen werden. Dieses Verfahren ist sehr aufwendig. Ferner sind für das einstückige Ausbilden von Kragen und Grundfläche in der Dichtmanschette aufwendige Herstellungsverfahren bzw. Apparaturen notwendig. Mit den hierfür eingesetzten gummiartigen Materialien lässt sich zudem eine gewünschte Diffusion bspw, zur Kondenswasservermeidung nicht erreichen.

Aus der GB 2 269 214 A ist ein Dichtmittel zum Abdichten von durch eine Oberfläche vorstehenden, länglichen Elementen wie Rohren bekannt, das eine quadratische Dichtplane und einen kegelförmig ausgebildeten Dichtkragen aufweist. Dichtplane und Dichtkragen sind einteilig aus einem gummiartigen Material hergestellt, wobei vorzugsweise der Dichtkragen keinen Schlitz aufweisen soll. Es ist jedoch möglich, den Dichtkragen und die Dichtplane mit einem durchgehenden Schlitz zu versehen, der dann mittels Klammerelementen geschlossen werden kann.

Aufgabe der vorliegenden Erfindung ist es daher, eine einfach herstellbare und montierbare Luftdichtungsmanschette vorzuschlagen, die den jeweiligen Installationen einfach angepasst werden kann.

Diese Aufgabe wird bei einer Luftdichtungsmanschette der eingangs genannten Art mit den Merkmalen des Anspruchs 1 gelöst. Es ist vorgesehen, dass die Dichtplane und der Dichtkragen zweiteilig ausgebildet und derart aneinander festgelegt sind, dass der erste Schlitz und der zweite Schlitz einen gemeinsamen durchgehenden Schlitz bilden. Dabei ist der Dichtkragen in einem vorgegebenen Winkel schräg an der Dichtplane angeordnet. Dadurch kann die Luftdichtungsmanschette einfach auch an bereits montierten Installationen angebracht werden, indem der Dichtkragen nachträglich um die fertige Installation gewickelt und die Dichtplane an der im Wesentlichen planen Fläche, gegen welche abgedichtet werden soll, angelegt wird. Durch die Aufteilung in eine ebene Dichtplane und einen im Wesentlichen zylinderförmigen, entlang seiner Längsachse geschlitzten Dichtkragen kann die Dichtungsmanschette besonders einfach aus beliebigen Materialien hergestellt werden. Insbesondere können die Dichtplane und der Dichtkragen jeweils aus einem flachen Zuschnitt gebildet sein, wobei der Dichtkragen erfindungsgemäß aus einem flächigen Stück Dichtmaterial ausgeschnitten und dann rohr- oder zylinderförmig an dem Durchgang der Dichtplane befestigt wird. Die dabei entlang seiner Längsachse entstehende Stoßkante wird erfindungsgemäß als Schlitz verwendet. Damit ist die erfindungsgemäße Dichtungsmanschette aus sehr einfachen Grundformen herstellbar.

Dies ermöglicht gemäß einer bevorzugten Ausführungsform die Verwendung eines flexiblen Spinnvlieses für die Dichtplane und/oder den Dichtkragen, welches üblicherweise nur wenig elastisch ist. Insbesondere kann ein Polyprophylen-Spinnvlies eingesetzt werden, das von Bekleidungstextilien bekannt ist und bei geringer Elastizität eine ausreichende Flexibilität aufweist. Ein solches Spinnvlies hat eine wasserdampfdiffusionsäquivalente Luftschichtdicke (sd-Wert) von ca. 2 Meter und ist damit an das Diffusionsverhalten der vermehrt eingesetzten, diffusionshemmenden Dampfbremsen und Luftdichtheitsbahnen angepasst, die bspw. im Dach von Gebäuden häufig eingesetzt werden. Derartige Vliese sind auch brandhemmend und genügen den üblichen Brandschutzbestimmungen.

Erfindungsgemäß kann das verwendete Spinnvlies mehrlagig aufgebaut sein, um eine hohe Stabilität und Belastbarkeit zu erreichen. Insbesondere zwei- oder dreilagige Vliese haben sich als besonders geeignet erwiesen.

Zum Festlegen von Dichtplane und Dichtkragen aneinander können Dichtplane und Dichtkragen miteinander vernäht sein. Dies bietet sich insbesondere bei der Verwendung von Spinnvliesen an, die eine ausreichende Reißfestigkeit aufweisen. Bei anderen Werkstoffen kommen auch ein Verkleben bzw. Verschweißen oder eine andere dauerhafte Verbindung in Frage.

Bei der erfindungsgemäß bevorzugten Vernähung von Dichtplane und Dichtkragen können die Nähte silikonisiert werden, um eine ausreichende Dichtheit im Bereich der Naht zu erreichen. Dieses Verfahren ist einfach anwendbar und eignet sich daher besonders gut auch für die Herstellung von Luftdichtungsmanschetten.

Um die Montage der Luftdichtungsmanschette zu erleichtern, kann gemäß einer bevorzugten Ausführungsform der vorliegenden Erfindung auf der dem Dichtkragen abgewandten Rückseite der Dichtplane mindestens ein Klebestreifen aufgebracht sein. Diese Rückseite der Dichtplane wird an der im Wesentlichen planen Fläche angelegt, die nach außen abgedichtet werden soll. Durch den einen bzw. die mehreren Klebestreifen kann damit eine einfache Vormontage und Fixierung der Luftdichtungsmanschette vorgenommen werden. Die Klebestreifen können dazu bspw. in der Nähe der Ränder der Dichtplane angeordnet sein. Besonders bevorzugt ist eine Ausführungsform, bei der (auch) ein Klebestreifen auf der Rückseite der Dichtplane neben dem vom Rand zum Durchgang verlaufenden ersten Schlitz auf einer oder beiden Seiten des Schlitzes angeordnet ist. Dies erleichtert die Montage der Luftdichtungsmanschette an bereits fertig montierten Leitungen, Kabeln oder dgl. und sorgt für eine sichere Vormontage, so dass das endgültige Abdichten bspw. mit einem Klebeband erleichtert wird.

Die Montage kann erfindungsgemäß dadurch weiter erleichtert werden, dass auf der Innenseite des Dichtkragens mindestens ein Klebestreifen aufgebracht ist, so dass der Dichtkragen an der Installation, bspw. einem Rohr, einem Kabel oder einer Leitung, einfach festgelegt werden kann. Dazu kann der Klebestreifen an der offenen, der Dichtplane abgewandten Stirnseite des Dichtkragens angeordnet sein. Besonders vorteilhaft ist auch die Anordnung von einem oder zwei Klebestreifen entlang des Schlitzes des Dichtkragens auf dessen der Installation zugewandten Innenseite, um den Dichtkragen im Bereich des Schlitzes sicher an der Installation festzulegen. Dadurch kann der Klebestreifen auf einer ersten Seite des Schlitzes bspw. an der Installation festgelegt, der Dichtkragen um die Installation gewickelt und der Klebestreifen auf der zweiten Seite nach einer entsprechenden Überlappung auf der Außenseite des Dichtkragens aufgeklebt werden.

Der Dichtkragen ist erfindungsgemäß in einem vorgegebenen Winkel an der Dichtplane angeordnet. Für schräg durch eine Fläche durchtretende Installationen, was bspw. bei Rohren oder Leitungen im Dachbereich der Fall ist, wird der Dichtkragen also in einem der Installation entsprechenden Winkel an der Dichtplane festgelegt.

In diesem Fall ist der gemeinsame Schlitz von Dichtplane und Dichtkragen gemäß einer besonders bevorzugten Ausführungsform der vorliegenden Erfindung an der Stelle angeordnet, an welcher der Winkel zwischen Dichtplane und Dichtkragen maximal ist. In diesem Bereich liegt der Winkel dann typischerweise zwischen 90° und 180°, so dass der Schlitz der Luftdichtungsmanschette nach dem Anbringen gut zugänglich ist und einfach abgedichtet werden kann.

Der Dichtkragen kann besonders einfach hergestellt werden, wenn die Grundfläche des Dichtkragens rechteckig oder quadratisch ist, wobei insbesondere eine Seite der Grundfläche in der Form zur Anordnung an dem Durchgang der Dichtplane angepasst ist, d.h. eine an die Form des Durchgangs und/oder dem gewünschten Anbringwinkel angepasste Außenform aufweist. Auch die Dichtplane weist erfindungsgemäß eine rechteckige oder quadratische Form auf. Insbesondere ist es für eine spätere Abdichtung vorteilhaft, wenn die Ränder der Dichtplane gradlinig sind.

Nach Vormontage der Luftdichtungsmanschette an der Installation, insbesondere einem Rohr oder einer Leitung, werden der gemeinsame Schlitz und/oder die Ränder der Dichtplane mit einem Klebeband abgedichtet. Daher ist es vorteilhaft, wenn sowohl der gemeinsame Schlitz als auch die Ränder der Dichtplane und/oder des Dichtkragens geradlinig verlaufen, weil sie in diesem Fall besonders einfach von einem Klebeband erfasst werden können.

Weitere Merkmale, Vorteile und Anwendungsmöglichkeiten der Erfindung ergeben sich auch aus der nachfolgenden Beschreibung eines Ausführungsbeispiels und der Zeichnung.

Es zeigen:
- Fig. 1: eine Vorderansicht einer erfindungsgemäßen Luftdichtungsmanschette;
- Fig. 2: eine Seitenansicht der Luftdichtungsmanschette gemäß Fig. 1;
- Fig. 3: eine Draufsicht auf die Dichtplane der Luftdichtungsmanschette gemäß Fig. 1;
- Fig. 4: eine Seitenansicht des Dichtkragens der Luftdichtungsmanschette gemäß Fig. 1;
- Fig. 5: eine dreidimensionale Ansicht einer vormontierten Luftdichtungsmanschette gemäß Fig. 1 und
- Fig. 6: eine dreidimensionale Ansicht einer fertig montierten Luftdichtungsmanschette gemäß Fig. 1.

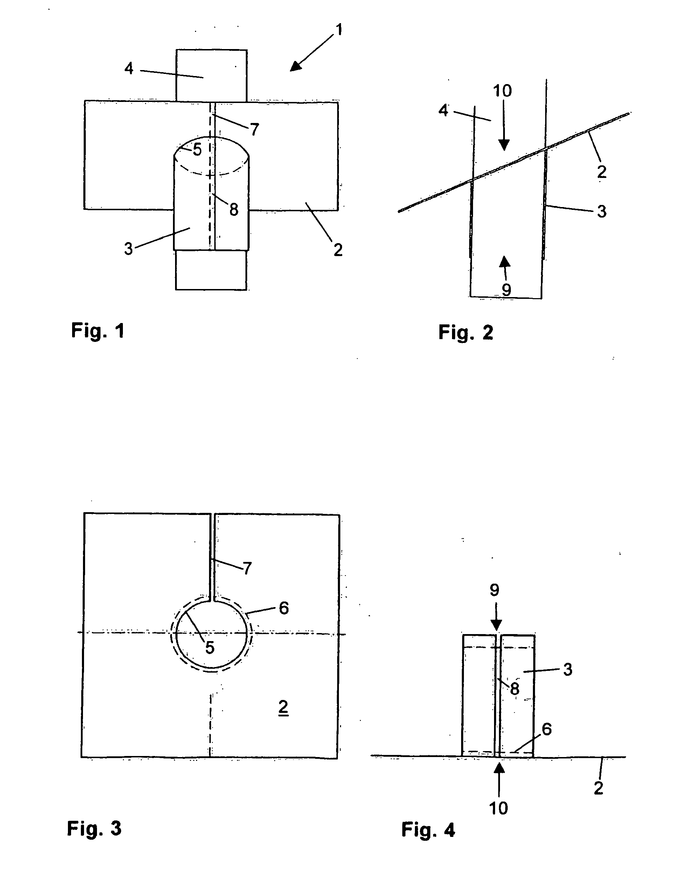

Die in Fig. 1 dargestellte Luftdichtungsmanschette 1 weist eine im Wesentlichen ebene Dichtplane 2 und einen Dichtkragen 3 auf, der um ein Installationsrohr 4 gelegt ist. Die Dichtplane 2 und der Dichtkragen 3 sind jeweils einteilig ausgebildet und um einen eine Durchtrittsöffnung für das lnstallationsrohr 4 bildenden Durchgang 5 in der Dichtplane 2 miteinander verbunden.

In dem dargestellten Beispiel sind die Dichtplane 2 und der Dichtkragen 3 aus einem zweilagigen Polyprophylen-Spinnvlies aufgebaut, welches eine stoffähnliche Flexibilität und eine wasserdampfdiffusionsäquivalente Luftschichtdicke (sd-Wert) von ca. 2 m aufweist. Ein derartiges Spinnvlies weist eine ausreichende Reißfestigkeit für ein Vernähen auf. Daher sind Dichtplane 2 und Dichtkragen 3 durch Vernähen aneinander festgelegt. Die Naht 6, welche in den Fig. 3 und 4 schematisch dargestellt ist, ist durch Silikonisieren abgedichtet.

Ein erster Schlitz 7 erstreckt sich von einem Rand der Dichtplane 2 zu dem Durchgang 5 in der Dichtplane 2. Ein zweiter Schlitz 8 verläuft von einer offenen Stirnseite 9 des Dichtkragens 3 zu der zweiten offenen Stirnseite 10 des Dichtkragens 3, wobei der Dichtkragen 3 an der offenen Stirnseite 10 mit der Dichtplane 2 vernäht ist, wie Fig. 4 zu entnehmen.

Der Rand des Dichtkragens 3 an der offenen Stirnseite 10 ist dabei an den Durchgang 5 der Dichtplane 2 angepasst, so dass die Dichtplane 2 und der Dichtkragen 3 einfach miteinander vernäht werden können. Dadurch können beliebige Winkel zwischen der Dichtplane 2 und dem Dichtkragen 3 vorgegeben werden, so dass die Luftdichtungsmanschette 1 besonders gut auch zur Anlage an einer planen, schräg verlaufenden Fläche geeignet ist, bspw. einem Dach mit einem senkrechtem Installationsrohr 4, welches schräg durch die Dachschräge 12 verläuft.

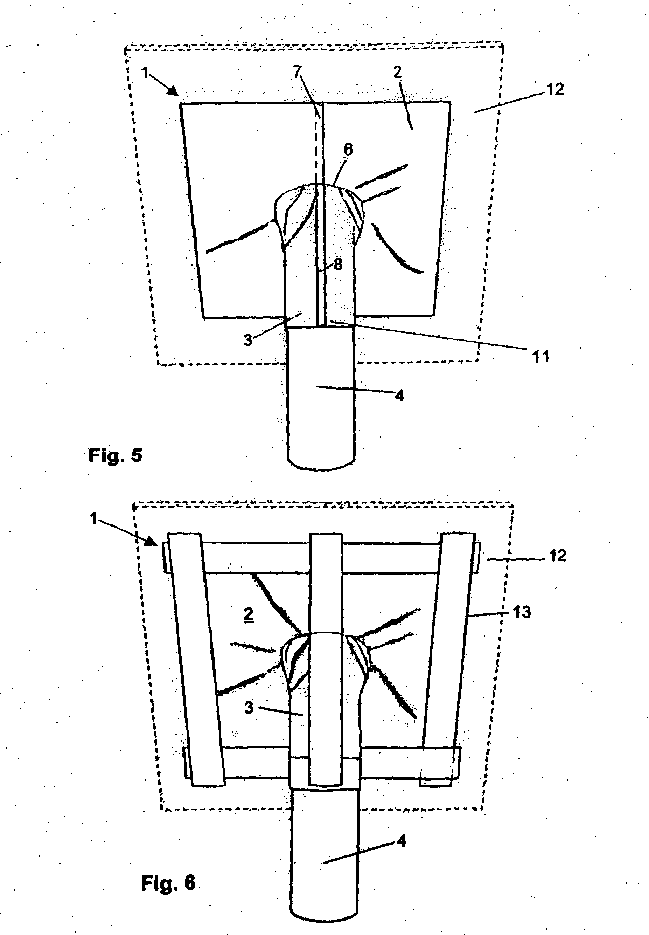

Die Schlitze 7, 8 sind dabei an der Stelle angeordnet, an der der Winkel zwischen der Dichtplane 2 und dem Dichtkragen 3 am größten ist. Der Dichtkragen 3 ist so an der Dichtplane 2 festgelegt, dass die Schlitze 7, 8 einen durchgehenden gemeinsamen Schlitz 7, 8 bilden. Dadurch ist die Luftdichtungsmanschette zu einer Seite hin offen und kann nachträglich um bestehende Installationsrohre oder dgl. gelegt werden, wobei die Dichtplane 2 und der Dichtkragen 3 so bemessen sind, dass die beiden durch den Schlitz 7, 8 getrennten Seiten nach der Montage einen Überlappungsbereich 11 bilden, wie in Fig. 5 dargestellt.

Fig. 5 zeigt eine vormontierte Luftdichtungsmanschette 1 an einer Dachschräge 12, in der die Rückseite der Dichtplane 2 an der Dachschräge 12 anliegt und das Installationsrohr 4 von dem an der Dichtplane 2 befestigten Dichtkragen 3 umgeben ist.

Die Dichtplane 2 ist durch den gemeinsamen Schlitz 7, 8 in der Dichtplane 2 und dem Dichtkragen 3 um das Installationsrohr 4 gelegt worden. Um die Installation zu erleichtern, sind auf der Rückseite der Dichtplane 2 nicht dargestellte Klebestreifen angebracht, mit denen die Dichtplane 2 an der Dachschräge 12 bzw. einem darauf angebrachten Abdichtmaterial vorläufig haftet, so dass die Luftdichtungsmanschette 1 nicht mehr von der Dachschräge 12 abfallen kann. Entsprechende Klebestreifen sind auch auf der Innenseite des Dichtkragens 3 angebracht, um eine einfache Vorfixierung des Dichtkragens 3 an dem Installationsrohr 4 zu erreichen. Vorzugsweise erstrecken sich Klebestreifen auch entlang des ersten und/oder zweiten Schlitzes 7, 8, damit die Luftdichtungsmanschette 1 entlang der Schlitze 7, 8 gut vormontierbar ist.

Nach der in Fig. 5 gezeigten Vormontage findet die endgültige Abdichtung der Dichtmanschette 1 mit einem Klebeband 13 statt, welches über die Außenränder der Dichtplane 2 und des Dichtkragens 3 sowie über den ersten und zweiten Schlitz 7, 8 geklebt wird, um die Luftdichtungsmanschette 1 vollständig gegen das Eindringen von Feuchtigkeit abzudichten, wie in Fig. 6 dargestellt. Da der gemeinsame Schlitz 7, 8 in der Dichtplane 2 und dem Dichtkragen 3 an der Stelle angeordnet ist, an welcher der Winkel zwischen der Dichtplane 2 und dem Dichtkragen 3 am größten ist, kann der gemeinsame Schlitz 7, 8 einfach mit Klebeband abgedeckt werden, da diese der Dachschräge 12 abgewandte Seite des Installationsrohres 4 gut zugänglich ist.

Mit der erfindungsgemäßen Luftdichtungsmanschette ist es möglich, eine einfach anbringbare und flexibel an verschiedene Installationen, wie beispielsweise das Installationsrohr 4 oder Leitungsdurchführungen, anpassbare Luftdichtungsmanschette 1 zu schaffen, die aus einem Spinnvliesmaterial hergestellt sein kann, welches bei absoluter Luftdichtheit die gewünschte Diffusionshemmung erhält und mit den herkömmlicherweise für Luftabdichtungsinstallationen verwendeten Arbeitsvorgängen angebracht werden kann. Insbesondere ist eine Abdichtung mit einem Klebeband 13 möglich, weil das Spinnvlies nur eine geringe Elastizität aufweist, so dass der Kleber des Klebebandes nicht wie bei hochelastischen Materialien, bspw. Gummi oder elastischen Geweben, fließt und im Laufe der Zeit seine Klebewirkung verliert. Die erfindungsgemäße Klebetechnik und die Verbindung von Dichtplane 2 und Dichtkragen 3 durch Vernähen weist eine hohe Altersbeständigkeit von mehr als 50 Jahren auf.

### Bezugszeichenliste:

- 1: Luftdichtungsmanschette
- 2: Dichtplane
- 3: Dichtkragen
- 4: Installationsrohr
- 5: Durchgang
- 6: Naht
- 7: Schlitz
- 8: Schlitz
- 9: Stirnseite
- 10: Stirnseite
- 11: Überlappungsbereich
- 12: Dachschräge, plane Fläche
- 13: Klebeband

## Patentansprüche

1. Luftdichtungsmanschette, insbesondere für Installationsdurchdringungen an Gebäuden wie Rohr- oder Leitungsdurchführungen, mit einer Dichtplane (2) zur Anlage an einer im Wesentlichen planen Fläche (12) und einem Dichtkragen (3), welcher um einen Durchgang (5) in der Dichtplane (2) angeordnet ist und von der Dichtplane (2) vorsteht, wobei sich ein erster Schlitz (7) von einem Rand der Dichtplane (2) zu dem Durchgang (5) und ein zweiter Schlitz (8) von einer offenen Stirnseite (9) des Dichtkragens (3) zu der anderen offenen Stirn seite (10) des Dichtkragens (3) erstrecken und wobei Dichtplane (2) und Dichtkragen (3) derart aneinander festgelegt sind, dass der erste Schlitz (7) und der zweite Schlitz (8) einen gemeinsamen Schlitz (7, 8) bilden, **dadurch gekennzeichnet, dass** die Dichtplane (2) und der Dichtkragen (3) zweiteilig ausgebildet sind und dass der Dichtkragen (3) in einem vorgegebenen Winkel schräg an der Dichtplane (2) angeordnet ist.

2. Luftdichtungsmanschette nach Anspruch 1, **dadurch gekennzeichnet, dass** die Dichtplane (2) und/oder der Dichtkragen (3) aus einem Spinnvlies, insbesondere einem Polypropylen-Spinnvlies, aufgebaut ist.

3. Luftdichtungsmanschette nach Anspruch 2, **dadurch gekennzeichnet, dass** das Spinnvlies mehrlagig, insbesondere zwei- oder dreilagig, ist.

4. Luftdichtungsmanschette nach einem der vorhergehenden Ansprüche, **dadurch gekennzeichnet, dass** Dichtplane (2) und Dichtkragen (3) miteinander vernäht sind.

5. Luftdichtungsmanschette nach Anspruch 4, **dadurch gekennzeichnet, dass** die Naht (6) silikonisiert ist.

6. Luftdichtungsmanschette nach einem der vorhergehenden Ansprüche, **dadurch gekennzeichnet, dass** auf der dem Dichtkragen (3) abgewandten Rückseite der Dichtplane (2) mindestens ein Klebestreifen aufgebracht ist.

7. Luftdichtungsmanschette nach einem der vorhergehenden Ansprüche, **dadurch gekennzeichnet, dass** auf der Innenseite des Dichtkragens (3) mindestens ein Klebestreifen aufgebracht ist.

8. Luftdichtungsmanschette nach einem der vorhergehenden Ansprüche, **dadurch gekennzeichnet, dass** der gemeinsame Schlitz (7, 8) von Dichtplane (2) und Dichtkragen (3) an der Stelle angeordnet ist, an welcher der Winkel zwischen Dichtplane (2) und Dichtkragen (3) maximal ist.

9. Luftdichtungsmanschette nach einem der vorhergehenden Ansprüche, **dadurch gekennzeichnet, dass** die Grundfläche des Dichtkragens (3) rechteckig oder quadratisch ist, wobei insbesondere eine Seite der Grundfläche in der Form zur Anordnung an dem Durchgang (5) der Dichtplane (2) angepasst ist.

10. Luftdichtungsmanschette nach einem der vorhergehenden Ansprüche, **dadurch gekennzeichnet, dass** der gemeinsame Schlitz (7, 8) und/oder die Ränder der Dichtplane (2) mit einem Klebeband (13) abdichtbar sind.

## Claims

1. Air seal sleeve, in particular for installation passages in buildings, such as pipe or line feed-throughs, with a sealing tarpaulin (2) for applying to a substantially plane surface (12) and a sealing collar (3) which is disposed around an opening (5) in the sealing tarpaulin (2) and projects from the sealing tarpaulin (2), wherein a first slit (7) extends from an edge of the sealing tarpaulin (2) to the opening (5) and a second slit (8) extends from one open front side (9) of the sealing collar (3) to the other open front side (10) of the sealing collar (3), and wherein the sealing tarpaulin (2) and the sealing collar (3) are fixed to one another such that the first slit (7) and the second slit (8) form a common slit (7, 8), **characterised in that** the sealing tarpaulin (2) and the sealing collar (3) are formed in two parts, and that the sealing collar (3) is disposed obliquely on the sealing tarpaulin (2) at a predetermined angle.

2. Air seal sleeve according to Claim 1, **characterised in that** the sealing tarpaulin (2) and/or the sealing collar (3) consist(s) of a spunbonded fabric, in particular a spunbonded polypropylene fabric.

3. Air seal sleeve according to Claim 2, **characterised in that** the spunbonded fabric is multi-layered, in particular double- or triple-layered.

4. Air seal sleeve according to any one of the preceding Claims, **characterised in that** the sealing tarpaulin (2) and the sealing collar (3) are sewn together.

5. Air seal sleeve according to Claim 4, **characterised in that** the seam (6) is siliconised.

6. Air seal sleeve according to any one of the preceding Claims, **characterised in that** at least one adhesive strip is applied to the back of the sealing tarpaulin (2) which is remote from the sealing collar (3).

7. Air seal sleeve according to any one of the preceding Claims, **characterised in that** at least one adhesive strip is applied to the inside of the sealing collar (3).

8. Air seal sleeve according to any one of the preceding Claims, **characterised in that** the common slit (7, 8) of the sealing tarpaulin (2) and the sealing collar (3) is disposed at the point at which the angle between the sealing tarpaulin (2) and the sealing collar (3) is maximal.

9. Air seal sleeve according to any one of the preceding Claims, **characterised in that** the base area of the sealing collar (3) is rectangular or square, wherein one side of the base area in particular is adapted in shape for disposal at the opening (5) of the sealing tarpaulin (2).

10. Air seal sleeve according to any one of the preceding Claims, **characterised in that** the common slit (7, 8) and/or the edges of the sealing tarpaulin (2) can be sealed with an adhesive tape (13).

## Revendications

1. Manchon d'étanchéité à l'air, en particulier pour des pénétrations d'installation sur des bâtiments telles que des passages de tube ou de conduite, avec une bâche étanche (2) pour l'application contre une surface (12) essentiellement plane et un collet étanche (3) qui est disposé autour d'un passage (5) dans la bâche étanche (2) et dépasse de la bâche étanche (2), dans lequel une première fente (7) s'étend d'un bord de la bâche étanche (2) au passage (5) et une seconde fente (8) s'étend d'un côté frontal (9) ouvert du collet étanche (3) à l'autre côté frontal (10) ouvert du collet étanche (3) et dans lequel la bâche étanche (2) et le collet étanche (3) sont fixés l'un à l'autre de sorte que la première fente (7) et la seconde fente (8) forment une fente (7, 8) commune, **caractérisé en ce que** la bâche étanche (2) et le collet étanche (3) sont réalisés en deux parties et **en ce que** le collet étanche (3) est disposé dans un angle prescrit en biais sur la bâche étanche (2).

2. Manchon d'étanchéité à l'air selon la revendication 1, **caractérisé en ce que** la bâche étanche (2) et/ou le collet étanche (3) est constitué d'un non-tissé en particulier d'un non-tissé en polypropylène.

3. Manchon d'étanchéité à l'air selon la revendication 2, **caractérisé en ce que** le non-tissé est composé de plusieurs couches, en particulier de deux ou trois couches.

4. Manchon d'étanchéité à l'air selon l'une quelconque des revendications précédentes, **caractérisé en ce que** la bâche étanche (2) et le collet étanche (3) sont cousus ensemble.

5. Manchon d'étanchéité à l'air selon la revendication 4, **caractérisé en ce que** la couture (6) est siliconisée.

6. Manchon d'étanchéité à l'air selon l'une quelconque des revendications précédentes, **caractérisé en ce qu'**au moins une bande autocollante est appliquée sur le côté arrière de la bâche étanche (2) éloigné du collet étanche (3).

7. Manchon d'étanchéité à l'air selon l'une quelconque des revendications précédentes, **caractérisé en ce qu'**au moins une bande autocollante est appliquée sur le côté intérieur du collet étanche (3).

8. Manchon d'étanchéité à l'air selon l'une quelconque des revendications précédentes, **caractérisé en ce que** la fente (7, 8) commune de la bâche étanche (2) et du collet étanche (3) est disposée à l'endroit, où l'angle entre la bâche étanche (2) et le collet étanche (3) est maximal.

9. Manchon d'étanchéité à l'air selon l'une quelconque des revendications précédentes, **caractérisé en ce que** la surface de base du collet étanche (3) est rectangulaire ou carrée, dans lequel en particulier la forme d'un côté de la surface de base est adaptée pour être disposé sur le passage (5) de la bâche étanche (2).

10. Manchon d'étanchéité à l'air selon l'une quelconque des revendications précédentes, **caractérisé en ce que** la fente (7, 8) commune et/ou les bords de la bâche étanche (2) peuvent être rendus étanches avec une bande autocollante (13).
